# EUROPÄISCHE PATENTSCHRIFT

(11) **EP 1 774 416 B1**
(45) Veröffentlichungstag und Bekanntmachung des Hinweises auf die Patenterteilung: **23.12.2009**
(21) Anmeldenummer: 05777721.1
(22) Anmeldetag: 19.07.2005
(51) Int. Cl.: G05B 19/042

(54) **VERFAHREN ZUR PARAMETRIERUNG EINES ELEKTRISCHEN FELDGERÄTES UND PARAMETRIERBARES ELEKTRISCHES FELDGERÄT**
METHOD FOR PARAMETERIZING AN ELECTRIC FIELD DEVICE AND PARAMETERIZABLE ELECTRIC FIELD DEVICE
PROCEDE DE PARAMETRAGE D'UNE UNITE DE TERRAIN ELECTRIQUE ET UNITE DE TERRAIN ELECTRIQUE PARAMETRABLE

(30) Priorität: 04.08.2004 DE 102004038306
(43) Veröffentlichungstag der Anmeldung: 18.04.2007
(73) Patentinhaber: SIEMENS AKTIENGESELLSCHAFT, 80333 München (DE)
(72) Erfinder: ERKENS, Ingo, 90518 Altdorf-Grünsberg (DE)
(86) Internationale Anmeldenummer: PCT/EP2005/053476
(87) Internationale Veröffentlichungsnummer: WO 2006/015926

(56) Entgegenhaltungen:
- WO-A1-01/09693
- "Bedienungsanleitung: NORDAC trio SK 300E" [Online] 1. Januar 2004 (2004-01-01), GETRIEBEBAU NORD GMBH & CO , XP002351660 Gefunden im Internet: URL:http://www.nord.com/manuals/files/bw-B U0300_DE.pdf> [gefunden am 2005-10-27] Seiten 23-32,38
- PATENT ABSTRACTS OF JAPAN Bd. 2003, Nr. 12, 5. Dezember 2003 (2003-12-05) & JP 2003 232517 A (RINNAI CORP), 22. August 2003 (2003-08-22)
- PATENT ABSTRACTS OF JAPAN Bd. 012, Nr. 380 (P-769), 12. Oktober 1988 (1988-10-12) & JP 63 126014 A (OMRON TATEISI ELECTRONICS CO), 30. Mai 1988 (1988-05-30)
- PATENT ABSTRACTS OF JAPAN Bd. 017, Nr. 384 (P-1575), 19. Juli 1993 (1993-07-19) & JP 05 062061 A (FUJI ELECTRIC CO LTD), 12. März 1993 (1993-03-12)
- PATENT ABSTRACTS OF JAPAN Bd. 015, Nr. 226 (P-1213), 10. Juni 1991 (1991-06-10) & JP 03 068012 A (SEIKO EPSON CORP), 25. März 1991 (1991-03-25)
- "NORDAC vector p-box" 1. Dezember 2002 (2002-12-01), GETRIEBEBAU NORD GMBH & CO KG , XP002351732 Gefunden im Internet: URL:http://www.nord.com/manuals/files/bw-B U4040_DE.pdf> [gefunden am 2005-10-28] Seiten 5-11

## Beschreibung

Die Erfindung betrifft ein Verfahren zur Parametrierung eines elektrischen Feldgerätes, wobei das Feldgerät eine Bedieneinheit mit darauf angeordneten Wahlschaltern aufweist, wobei als Wahlschalter mehrpolige Stellungsschalter verwendet werden.

Elektrische Feldgeräte werden insbesondere zur Automatisierung von Energieversorgungsanlagen, wie beispielsweise elektrischen Energieversorgungsnetzen, sowie bei verfahrenstechnischen Prozessen und der Industrieautomatisierung eingesetzt. Damit solche Feldgeräte die gewünschten Funktionen durchführen, müssen sie bei ihrer Inbetriebsetzung parametriert werden, das heißt, es müssen spezielle Gerätefunktionen eingestellt sowie Einstellwerte, beispielsweise für Schwellenwerte und Betriebsparameter, festgelegt werden. Solche Einstellungen sollen im Folgenden zusammenfassend als Geräteeinstellungen bezeichnet werden.

Aus dem Siemens-Gerätehandbuch "SIPROTEC EASY: Digitaler Überstromzeitschutz 7SJ45", Bestellnr. C53000-K1174-C001-7, ist aus den Kapiteln "Aufbau" und "Einstellungen", insbesondere den Seiten 9 bis 16, ein elektrisches Feldgerät in Form eines digitalen Überstromzeitschutzgerätes für Energieversorgungsnetze bekannt, das eine Bedieneinheit mit darauf angeordneten Stellungsschaltern in Form so genannter DIP-Schalter (DIP = Dual Inline Package), also Schaltern mit zweireihig angeordneten Anschlüssen, aufweist. Den insgesamt 30 DIP-Schaltern sind über eine Beschriftung auf der Bedienplatte des Überstromzeitschutzgerätes jeweils bestimmte Funktionen fest zugeordnet. So kann beispielsweise durch Verstellen eines der DIP-Schalter das elektrische Überzeitstromschutzgerät wahlweise an ein elektrisches Netz mit einer Frequenz von 50 oder 60 Hz angepasst werden. Weitere DIP-Schalter bestimmen den Betriebsmodus des Überstromzeitschutzgerätes und legen verschiedene Grenzwerte, beispielsweise für Stromschwellen oder Verzögerungszeiten, fest. Aufgrund der optisch und schaltungstechnisch festen Zuordnung einzelner Gerätefunktionen zu ihren entsprechenden DIP-Schaltern ist die Anzahl der am Gerät sinnvoll einstellbaren Schalterkombinationen - und damit auch die Anzahl der einstellbaren Gerätefunktionen - begrenzt. So schließen sich beispielsweise bei der Wahl des Betriebsmodus einige Schalterkombinationen gegenseitig aus.

Aus der Bedienungsanleitung "NORDAC trio SK 300E", 1. Januar 2004, GETRIEBEBAU NORD GMBH & CO, XP002351660 geht eine sogenannte "Parameterbox" hervor, mit der Parameter für ein elektrisches Gerät ausgewählt werden können. Anschließend sendet die Parameterbox die fertige Parametrierung an das elektrische Gerät.

Außerdem zeigen die Dokumente "PATENT ABSTRACTS OF JAPAN Bd. 2003, Nr. 12, 5. Dezember 2003" und JP 2003 232517 A (RINNAI CORP), 22. August 2003, ein Gerät mit einem demontierbaren sogenannten "Dip-Schalter", bei dem abhängig vom Vorhandensein und der Stellung des Dip-Schalters unterschiedliche Parametersätze ausgewählt werden können.

Die Dokumente "PATENT ABSTRCTS OF JAPAN Bd. 012, Nr. 380 (P-769), 12. Oktober 1988" und "JP 63 126014 A (OMRON TATEISI ELECTRONICS CO), 30. Mai 1988, beschreiben ein elektrisches Gerät, bei dem mittels eines Wahlschalters ein vorgegebener Temperatursensor ausgewählt werden kann.

Aus der WO 01/09693 A1 geht schließlich eine Steuereinrichtung hervor, deren Konfigurationseinstellungen über einen oder mehrere Wahlschalter festgelegt werden kann.

Der Erfindung liegt die Aufgabe zugrunde, ein Verfahren der oben angegebenen Art bereitzustellen, bei dem trotz einfachen Aufbaus des elektrischen Feldgerätes eine vergleichsweise große Anzahl von Funktionen des elektrischen Feldgerätes parametrierbar sind.

Diese Aufgabe wird erfindungsgemäß durch ein Verfahren der angegebenen Art gelöst, bei dem mittels einer Datenverarbeitungseinrichtung aus vorgegebenen Funktionseinstellungen für das elektrische Feldgerät eine Parametrierzahl ermittelt wird, wobei die Parametrierzahl vorzunehmenden Einstellungen der Wahlschalter entspricht, vorgenommene Einstellungen der Wahlschalter von einer Steuereinheit des elektrischen Feldgerätes als Parametrierzahl erfasst werden, und die Steuereinheit anhand einer in einem Speicher des Feldgerätes hinterlegten Tabelle zu der die Einstellungen der Wahlschalter beschreibenden Parametrierzahl gehörende Geräteeinstellungen des elektrischen Feldgerätes ermittelt und diese unter Fertigstellung der Parametrierung des elektrischen Feldgerätes einstellt.

Der Vorteil des erfindungsgemäßen Verfahrens besteht darin, dass keine feste Zuordnung zwischen jeweils einem Wahlschalter und einer entsprechenden Geräteeinstellung besteht, sondern vielmehr jeder beliebigen, über die Wahlschalter vorgenommenen Eingabe einer Parametrierzahl eine entsprechende Parametrierung des elektrischen Feldgerätes zugeordnet werden kann. Durch die hierbei erhöhte Anzahl an den Wahlschaltern einstellbarer Kombinationsmöglichkeiten steigt der parametrierbare Funktionsumfang des elektrischen Feldgerätes um ein Vielfaches verglichen mit der festen Zuordnung von einzelnen Schaltern zu einzelnen Gerätefunktionen.

Als konstruktiv besonders einfach wird es angesehen, dass als Wahlschalter mehrpolige Stellungsschalter verwendet werden. In diesem Fall kann z.B. der von dem oben erwähnten Überstromzeitschutzgerät bekannte Aufbau der Bedieneinheit mit einer Anzahl von Wahlschaltern in Form von DIP-Schaltern weitgehend übernommen werden. Eine feste optische Zuordnung mit Hilfe einer den Schaltern zugeordneten Beschriftung auf der Bedieneinheit entfällt jedoch. Durch die Steuereinheit des elektrischen Feldgerätes wird in diesem Fall die an den Wahlschaltern eingestellte Parametrierzahl erfasst. Bereits bei einem aus sechs einzelnen DIP-Schaltern bestehenden sechspoligen Stellungsschalter ergibt sich hierbei eine mögliche Anzahl von Kombinationen von 2⁶=64 Kombinationsmöglichkeiten. Bei der Verwendung weiterer Stellungsschalter erhöht sich die Anzahl an Kombinationsmöglichkeiten entsprechend.

Die einzugebende Parametrierzahl kann sehr einfach mit Hilfe einer auf einer Datenverarbeitungsanlage installierten Parametriersoftware ermittelt werden, indem nämlich der Betreiber des elektrischen Feldgerätes gewünschte Gerätefunktionseinstellungen vorgibt und die Parametriersoftware daraus die entsprechende einzustellende Parametrierzahl bestimmt. Als vorteilhafte Ausführungsform des erfindungsgemäßen Verfahrens wird es angesehen, dass die zu der Parametrierzahl gehörenden Geräteeinstellungen auf einer Anzeigeeinrichtung des elektrischen Feldgerätes dargestellt werden. Auf diese Weise kann leicht eine Anzeige der mittels der Parametrierzahl ausgewählten Geräteeinstellungen vorgenommen werden.

Alternativ kann aber auch vorgesehen sein, dass die zu der Parametrierzahl gehörenden Geräteeinstellungen mittels Leuchtelementen an dem elektrischen Feldgerät angezeigt werden, wobei den einzelnen Leuchtelementen am Feldgerät über eine Beschriftung jeweils eine Geräteeinstellung zugeordnet ist. In diesem Fall wären die möglichen Geräteeinstellungen, beispielsweise auf der Bedienplatte des elektrischen Feldgerätes aufgeführt und werden je nach über die Parametrierzahl eingestellter Geräteeinstellung mit Leuchtelementen, wie beispielsweise Leuchtdioden, markiert. Auch auf diese Weise ist eine einfache und preisgünstige Darstellung der gewählten Geräteeinstellungen möglich.

Gemäß einer weiteren vorteilhaften Ausführungsform des erfindungsgemäßen Verfahrens kann in diesem Zusammenhang ferner vorgesehen sein, dass die Datenverarbeitungseinrichtung eine der Parametrierzahl entsprechende Schalterkombination auf einer Anzeigevorrichtung darstellt oder als Ausdruck ausgibt.

Zur weiteren Erläuterung ist in
- Figur 1: schematisch ein erstes Ausführungsbeispiel eines Verfahrens zur Parametrierung eines elektrischen Feldgerätes, in
- Figur 2: schematisch ein weiteres Ausführungsbeispiel eines Verfahrens zur Parametrierung eines elektrischen Feldgerätes und in
- Figur 3: eine schematische Darstellung zur Erläuterung der Ermittlung einer Parametrierzahl dargestellt.

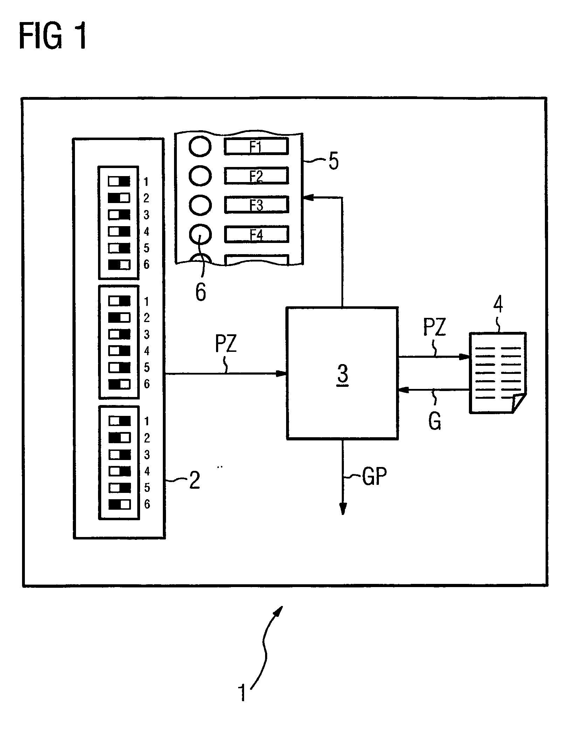

Figur 1 zeigt schematisch ein elektrisches Feldgerät 1, wobei die Darstellung gemäß Figur 1 weniger eine genaue Abbildung des elektrischen Feldgerätes als vielmehr Funktionsblöcke zur Erläuterung des Parametrierverfahrens angibt. Das elektrische Feldgerät 1 weist eine Bedieneinheit mit Wahlschaltern 2 auf, die in Figur 1 in Form von Stellungsschaltern oder so genannten DIP-Schaltern angedeutet sind. Die Stellung der Wahlschalter 2 kann über eine Steuereinheit 3 des elektrischen Feldgerätes 1 abgefragt werden. In einem Speicher des Feldgerätes 1 ist eine Tabelle 4 für den Zugriff durch die Steuereinheit 3 hinterlegt. zur Parametrierung des Feldgerätes 1 ist vom Betreiber des elektrischen Feldgerätes 1 bei dessen Inbetriebsetzung an den Stellungsschaltern eine Schaltkombination einzugeben, die letztlich eine Parametrierzahl PZ angibt. In Figur 1 sind hierzu drei sechspolige Stellungsschalter vorgesehen, wobei den einzelnen Polen der Stellungsschalter jeweils Nummerierungen von 1 bis 6 zugeordnet sind. Zum Einstellen einer Parametrierzahl an den Stellungsschaltern ist der jeweilige Pol des Stellungsschalters in eine Einschaltstellung zu bringen (in Figur 1 entspricht beispielsweise die nach rechts geschobene Stellung der Einschaltstellung). Beispielsweise ist in Figur 1 als Parametrierzahl PZ die Zahl "1 3 4 5 1 5 1 3 4 5" eingestellt. Diese Parametrierzahl PZ wird von der Steuereinheit 3 an den Wahlschaltern 2 ausgelesen und mit der Tabelle 4 verglichen. Gemäß der Tabelle 4 sind nämlich entsprechenden Parametrierzahlen PZ jeweils zugehörende Geräteeinstellungen G zugeordnet. Die Steuereinheit 3 sucht nun also zu den entsprechenden Parametrierzahlen PZ gehörende Geräteeinstellungen aus der Tabelle 4 heraus und verwendet die Geräteeinstellungen anschließend zur Einstellung der Geräteparametrierung GP, was durch den Pfeil GP in Figur 1 angedeutet ist. In dem genannten Beispiel kann der Parametrierzahl "1 3 4 5 1 5 1 3 4 5" beispielsweise eine Einstellung zugeordnet sein, die dem Feldgerät als Betriebs-Frequenz z.B. 50 Hz zuordnet, den Betriebsmodus des Feldgerätes beispielsweise als unabhängigen Überstromzeitschutz festlegt und entsprechende Einstellwerte für Schwellenwerte, z.B. Stromschwellenwerte, festlegt. Damit ist das Feldgerät 1 durch Eingabe einer einzigen Parametrierzahl in allen seinen gewünschten Funktionen parametriert.

Durch Vorsehen entsprechend vieler mehrpoliger Stellungsschalter ist es möglich, nahezu beliebig viele Geräteeinstellungen vornehmen zu können. Bereits für einen einzigen sechspoligen Stellungsschalter ergibt sich rein rechnerisch eine Anzahl von 2⁶=64 möglichen Schaltkombinationen und somit eine Anzahl von 64 verschiedenen Geräteparametrierungen. Bei zwei sechspoligen Stellungsschaltern liegen schon mehr als 4000 mögliche Kombinationen zur Geräteparametrierung vor. Entsprechend erhöht sich die Anzahl bei Hinzunahme weiterer mehrpoliger Stellungsschalter. Die mehrpoligen Stellungsschalter müssen hierbei nicht auf eine Polanzahl von 6 beschränkt sein, es ist vielmehr auch der Einsatz von Stellungsschaltern mit anderen Polzahlen möglich.

Um die ausgewählte Geräteparametrierung auch für den Betreiber des Feldgerätes sichtbar am Feldgerät darstellen zu können, ist gemäß Figur 1 beispielsweise ein Anzeigeblock 5 vorgesehen, der Leuchtelemente in Form von Leuchtdioden 6 aufweist. Jeder Leuchtdiode 6 ist in einem Funktionsfeld - in Figur 1 sind beispielhaft vier Funktionsfelder F1 bis F4 gezeigt - eine entsprechende Geräteeinstellung zugeordnet. Beispielsweise kann das erste Funktionsfeld F1 die Beschriftung "50 Hz" als mögliche Einstellung für das elektrische Feldgerät aufweisen. Ist durch die Parametrierzahl PZ nun die Frequenz gemäß der Tabelle 4 auf 50 Hz eingestellt, so wird die dem ersten Funktionsfeld F1 zugeordnete Leuchtdiode angesteuert und markiert am Gerät sichtbar diese Geräteeinstellung. Das zweite Funktionsfeld F2 kann mittels einer entsprechenden Beschriftung beispielsweise eine Frequenzauswahl von 60 Hz angeben; ist durch die Parametrierzahl PZ diese Frequenz ausgewählt, so wird an Stelle der Leuchtdiode des ersten Funktionsfeldes F1 die Leuchtdiode des zweiten Funktionsfeldes F2 aufleuchten.

Entsprechend können alle möglichen Geräteeinstellungen des elektrischen Feldgerätes in einem solchen Anzeigeblock 5 dargestellt sein (der Anzeigeblock 5 muss folglich nicht auf die hier gezeigten vier Funktionsfelder F1 bis F4 mit entsprechenden Leuchtdioden beschränkt sein), so dass von außen sichtbar immer alle ausgewählten Geräteeinstellungen erkennbar sind. Da mit einer einzigen Parametrierzahl immer mehrere Geräteeinstellungen gleichzeitig festgelegt werden, werden üblicherweise immer mehrere der vorgesehenen Funktionsfelder markiert sein.

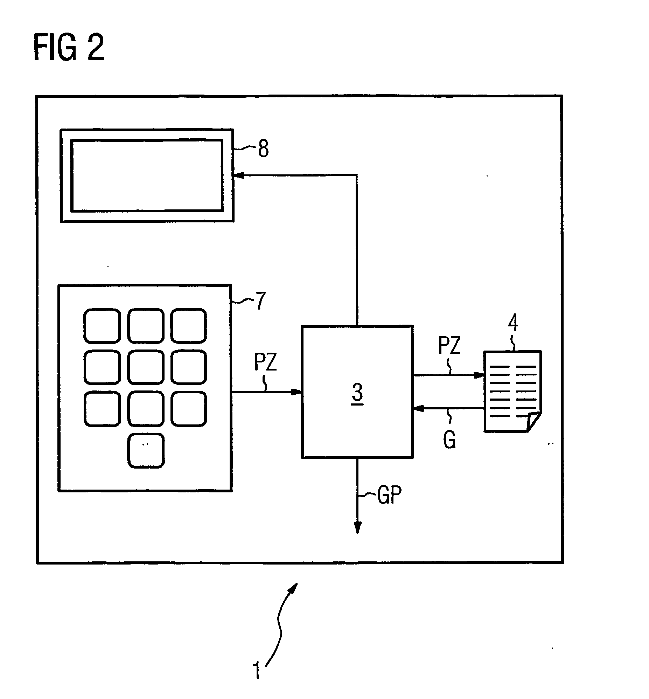

In Figur 2 ist eine alternative Ausführungsform eines Verfahrens zum Parametrieren eines Feldgerätes 1 aufgezeigt. Das Verfahren gemäß Abbildung 2 unterscheidet sich von dem hinsichtlich Figur 1 erläuterten Verfahren unter anderem dadurch, dass die Eingabe der Parametrierzahl PZ hier nicht über mehrpolige Stellungsschalter, sondern einen Ziffernblock 7 mit einzelnen Tastern vorgenommen wird. Die Steuereinheit 3 liest in diesem Fall jeweils die an dem Ziffernblock 7 eingestellte Parametrierzahl PZ aus und vergleicht diese wiederum mit in der Tabelle 4 gespeicherten Geräteeinstellungen G, die entsprechend der jeweiligen Parametrierzahl PZ aus der Tabelle 4 ausgelesen und als Geräteparametrierung GP verwendet werden.

Eine weitere Abweichung zu dem Verfahren gemäß Figur 1 ist in Figur 2 dadurch gegeben, dass die mittels der Parametrierzahl PZ ausgewählten Geräteeinstellungen nunmehr auf einem Display, beispielsweise einer LCD-Anzeige 8, angezeigt werden. Über den Ziffernblock 7 können beliebig lange Parametrierzahlen PZ eingegeben werden und auf dem Display 8 beliebig viele Geräteeinstellungen angezeigt werden.

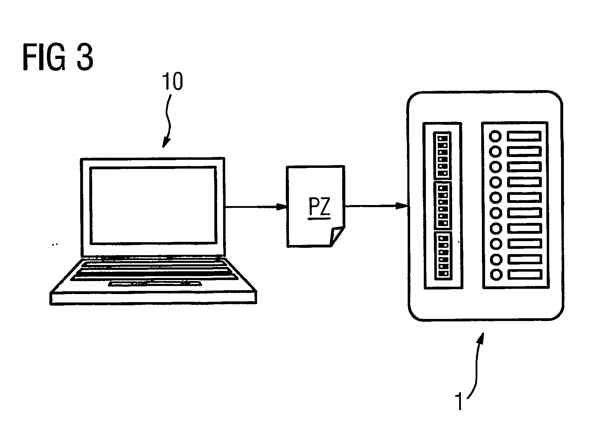

In Figur 3 ist schließlich eine Möglichkeit zum Erzeugen der zur Geräteparametrierung erforderlichen Parametrierzahl PZ erläutert. So kann beispielsweise der Betreiber des elektrischen Feldgerätes 1 bei der Inbetriebsetzung des elektrischen Feldgerätes die gewünschten Gerätefunktionen für das elektrische Feldgerät 1 mittels einer auf einer Datenverarbeitungseinrichtung 10 installierten Parametriersoftware auswählen. Hierbei können beispielsweise die gewünschten Funktionen auf einer Bildschirmansicht der Parametriersoftware markiert werden. Mittels der Parametriersoftware wird aus den markierten Gerätefunktionen eine entsprechende Parametrierzahl PZ generiert. Mit anderen Worten ist der Datenverarbeitungseinrichtung 10 eine zu der Tabelle 4 in dem elektrischen Feldgerät (vgl. Figuren 1 und 2) inverse Tabelle hinterlegt, auf die die Parametriersoftware zugreifen kann. Umgekehrt zu dem hinsichtlich der Figuren 1 und 2 erläuterten Vorgang, bei dem die Steuereinheit 3 des Feldgerätes 1 aus der Tabelle 4 die zu einer jeweiligen Parametrierzahl PZ gehörenden Geräteeinstellungen auswählt, wird bei der Parametriersoftware nunmehr zu entsprechenden Geräteeinstellungen bzw. gewünschten Gerätefunktionen aus der inversen Tabelle eine entsprechende Parametrierzahl PZ ausgelesen. Diese kann auf einer Anzeigevorrichtung, z.B. einem Bildschirm, der Datenverarbeitungseinrichtung 10 angezeigt oder mittels eines in Figur 3 nicht gezeigten, an die Datenverarbeitungseinrichtung 10 angeschlossenen Druckers ausgedruckt werden.

Der Betreiber des elektrischen Feldgerätes 1 verwendet nun diese Parametrierzahl PZ - wie zu den Figuren 1 und 2 bereits erläutert - zur Einstellung der gewünschten Geräteparametrierung an dem elektrischen Feldgerät 1.

Bei Verwendung von mehrpoligen Stellungsschaltern (vgl. Fig. 1) zur Eingabe der Parametrierzahl PZ an dem elektrischen Feldgerät 1 kann zur Vereinfachung an Stelle der Parametrierzahl PZ in Form einzelner Ziffern auch eine bildliche Darstellung der entsprechenden Schalterstellungen angezeigt oder ausgedruckt werden. Der Betreiber des elektrischen Feldgerätes muss in diesem Fall nur noch die Schaltereinstellungen an den Stellungsschaltern des elektrischen Feldgerätes derart wählen, dass sie der ausgedruckten bildlichen Darstellung entsprechen.

## Patentansprüche

1. Verfahren zur Parametrierung eines elektrischen Feldgerätes (1), wobei das Feldgerät (1) eine Bedieneinheit mit mehreren darauf angeordneten Wahlschaltern (2) aufweist, wobei als Wahlschalter (2) mehrpolige Stellungsschalter verwendet werden,
**dadurch gekennzeichnet, dass**
- mittels einer Datenverarbeitungseinrichtung (10) aus vorgegebenen Funktionseinstellungen für das elektrische Feldgerät (1) eine Parametrierzahl (PZ) ermittelt wird, wobei die Parametrierzahl vorzunehmenden Einstellungen der Wahlschalter entspricht,
- vorgenommene Einstellungen der Wahlschalter (2) von einer Steuereinheit (3) des elektrischen Feldgerätes (1) als Parametrierzahl (PZ) erfasst werden und
- die Steuereinheit (3) anhand einer in einem Speicher des Feldgerätes (1) hinterlegten Tabelle (4) zu der die Einstellungen der Wahlschalter beschreibenden Parametrierzahl (PZ) gehörende Geräteeinstellungen (6) des elektrischen Feldgerätes (1) ermittelt und diese unter Fertigstellung der Parametrierung des elektrischen Feldgerätes (1) einstellt.

2. Verfahren nach einem der vorangehenden Ansprüche,
**dadurch gekennzeichnet, dass**
- die zu der Parametrierzahl (PZ) gehörenden Geräteeinstellungen (6) auf einer Anzeigeeinrichtung (8) des elektrischen Feldgerätes (1) dargestellt werden.

3. Verfahren nach Anspruch 1,
**dadurch gekennzeichnet, dass**
- die zu der Parametrierzahl (PZ) gehörenden Geräteeinstellungen (6) mittels Leuchtelementen an dem elektrischen Feldgerät (1) angezeigt werden, wobei den einzelnen Leuchtelementen (6) am Feldgerät (1) über eine Beschriftung jeweils eine Geräteeinstellung zugeordnet ist.

4. Verfahren nach einem der vorangehenden Ansprüche,
**dadurch gekennzeichnet, dass**
- die Datenverarbeitungseinrichtung (10) eine der Parametrierzahl (PZ) entsprechende Schalterkombination auf einer Anzeigevorrichtung darstellt oder als Ausdruck ausgibt.

## Claims

1. Method for configuration of an electrical field device (1), with the field device (1) having a control unit with a plurality of selection switches (2) arranged on it, multipole position switches being used as selection switches (2), **characterized in that**
- a configuration number (PZ) is determined by means of a data processing device (10) from predetermined functional settings for the electrical field device (1),
- selection switch (2) settings that are made are detected by a control unit (3) for the electrical field device (1) as a configuration number (PZ), and
- the control unit (3) uses a table (4), which is stored in a memory for the field device (1) to determine the device settings (6) associated with the configuration number (PZ) which describes the settings and the selection switches, for the electrical field device (1), and sets these, thus completing the configuration of the electrical field device (1).

2. Method according to one of the preceding claims,
**characterized in that**
- the device settings (6) which are associated with the configuration number (PZ) are displayed on a display device (8) of the electrical field device (1).

3. Method according to Claim 1, **characterized in that**
- the device settings (6) which are associated with the configuration number (PZ) are displayed by means of light elements on the electrical field device (1), with in each case one device setting being associated with the individual light elements (6) on the field device (1) by means of an inscription.

4. Method according to one of the preceding claims,
**characterized in that**
- the data processing device (10) displays a switch combination, which corresponds to the configuration number (PZ), on a display apparatus, or outputs this as a printout.

## Revendications

1. Procédé de paramétrisation d'un appareil ( 1 ) électrique de terrain, dans lequel l'appareil ( 1 ) de terrain a une unité de service ayant plusieurs commutateurs ( 2 ) de sélection qui y sont montés, des commutateurs de sélection à plusieurs pôles étant utilisés comme commutateurs ( 2 ) de sélection,
**caractérisé en ce que**
- au moyen d'un dispositif ( 10 ) de traitement de données, on détermine un nombre ( PZ ) de paramétrisation à partir de réglages de fonction prescrits pour l'appareil ( 1 ) électrique de terrain, le nombre de paramétrisation correspondant à des réglages à effectuer des commutateurs de sélection,
- on relève des réglages effectués des commutateurs ( 2 ) de sélection par une unité ( 3 ) de commande de l'appareil ( 1 ) électrique de terrain sous la forme d'un nombre ( PZ ) de paramétrisation et
- l'unité ( 3 ) de commande détermine au moyen d'une table ( 4 ) mémorisée dans une mémoire de l'appareil ( 1 ) de terrain des réglages ( 6 ) de l'appareil ( 1 ) électrique de terrain appartenant au nombre de paramétrisation décrivant les réglages des commutateurs de sélection et les règles en achevant la paramétrisation de l'appareil ( 1 ) électrique de terrain.

2. Procédé suivant l'une des revendications précédentes,
**caractérisé en ce que,**
- les réglages ( 6 ) d'appareil appartenant au nombre ( PZ ) de paramétrisation sont représentés sur un dispositif ( 8 ) d'affichage de l'appareil ( 1 ) électrique de terrain.

3. Procédé suivant la revendication 1,
**caractérisé en ce que,**
- les réglages ( 6 ) d'appareil appartenant au nombre ( PZ ) de paramétrisation sont affichés au moyen d'éléments d'éclairage sur l'appareil ( 1 ) électrique de terrain respectivement un réglage d'appareil étant affecté aux divers éléments ( 6 ) d'éclairage sur l'appareil ( 1 ) de terrain par l'intermédiaire d'une inscription.

4. Procédé suivant les revendications précédentes,
**caractérisé en ce que,**
- le dispositif ( 10 ) de traitement de données représente, sur un dispositif d'affichage, une combinaison de commutateurs correspondant au nombre ( PZ ) de paramétrisation ou les met sous la forme d'une expression.
